# EUROPEAN PATENT APPLICATION

(11) **EP 4 711 878 A1**
(43) Date of publication of application: **18.03.2026**
(21) Application number: 24306483.9
(22) Date of filing: 11.09.2024
(51) Int. Cl.: G05D 1/226, G05D 105/22, G05D 107/13, G05D 109/22

(54) **REMOTE PILOT INTERFACE**

(71) Applicant: Collins Aerospace Ireland, Limited, T23 XN53 Cork City (IE)
(72) Inventor: MAYIMA, Amandine Alexia, Cork, T23 CY9K (IE); AUDOUNET, Laurent, Carbonne, 31390 (FR)
(74) Representative: Dehns

(57) **Abstract**

A remote human-machine interface system (110) for piloting an aircraft (100). The interface system is agnostic to a plurality of aircraft, and is arranged to receive user input information from a user (118) and aircraft output information from a plurality of aircraft systems (102, 106) onboard the aircraft. The interface system includes a processor (114) arranged to convert the user input information to aircraft-readable input information, and convert the aircraft output information to interface-readable output information. The interface system outputs the interface-readable output information to the user, and outputs the aircraft-readable input information to the aircraft.

## Description

### FIELD OF TECHNOLOGY

The examples described herein relate to a system for and a method of remote piloting an aircraft with a human-machine interface system, in particular where the system and method is agnostic and may be used with a plurality of aircraft.

### BACKGROUND

Typically, aircraft are operated by two pilots onboard the aircraft. However, future commercial air operations may be single pilot operations (SPO), where the aircraft is operated by a first pilot onboard the aircraft, and is operated remotely by a second pilot on the ground, e.g. in the event the first pilot is incapacitated. The remote pilot may operate controls on the ground, which are passed to the aircraft.

Different aircraft typically have very different operating systems, ranging how different parts of the aircraft are controlled, to how information is displayed to the pilot. This means that pilots should be trained how to operate a particular aircraft before flying. Furthermore, this means that the controls operated by the remote pilot will be different for each aircraft, and the remote pilot should also be trained how to operate a particular aircraft.

However, this may be costly, both with regards to training time, and the cost to build separate remote pilot controls for different aircraft to be operated. Furthermore, if a remote pilot becomes confused as to which aircraft they are operating, they could cause problems onboard the aircraft, e.g. if they press a button which on one aircraft causes the landing gear to retract, and on another aircraft causes the landing gear to extend.

The present disclosure aims to address these problems.

### SUMMARY

According to this disclosure, there is provided a remote human-machine interface system for piloting an aircraft;
wherein the interface system is agnostic to a plurality of aircraft;
wherein the interface system is arranged to:
   receive user input information from a user; and
   receive aircraft output information from a plurality of aircraft systems onboard the aircraft;
wherein the interface system comprises a processor is arranged to:
   convert the user input information to aircraft-readable input information; and
   convert the aircraft output information to interface-readable output information;
wherein the interface system is further arranged to:
output the interface-readable output information to the user; and
output the aircraft-readable input information to the aircraft.

Also according to this disclosure, there is provided a method of piloting an aircraft with a remote human-machine interface system,
wherein the interface system is agnostic to a plurality of aircraft;
wherein the method comprises:
   receiving user input information from a user at the interface system; and
   receiving aircraft output information from a plurality of aircraft systems onboard the aircraft at the interface system;
   converting the user input information to aircraft-readable input information at a processor connected to the interface system;
   converting the aircraft output information to interface-readable output information at the processor;
   outputting the interface-readable output information to a user at the interface system; and
   outputting the aircraft-readable input information to the aircraft at the interface system.

The remote human-machine interface system is arranged externally to the aircraft being piloted, e.g. on the ground or onboard a different aircraft. This allows an aircraft to be piloted remotely, for example to assist single pilot operations (SPOs), e.g. in the event that the pilot onboard is incapacitated.

Different aircraft typically have different control systems and interfaces, and typically require a pilot to be trained to operate each type of aircraft individually. For example, Airbus (RTM) aircraft typically use an Electronic Centralized Aircraft Monitor (ECAM) for monitoring and displaying engine and aircraft system information, whilst Boeing (RTM) and Embraer (RTM) aircraft typically use an Engine Indicating and Crew Alerting System (EICAS). The remote human-machine interface system is agnostic to a plurality of aircraft, and therefore may be used with a plurality of aircraft and their respective operating systems.

The remote human-machine interface system (hereby referred to as the 'interface system') receives aircraft output information from a plurality of aircraft systems onboard the aircraft. The processor then converts the aircraft output information to interface-readable output information. The interface system may then output the aircraft output information to the user, regardless of the operating system or type of aircraft. Thus, the processor may 'translate' the information from the aircraft to the interface system output.

The processor may be arranged to abstract the aircraft output information from the plurality of aircraft systems, and convert the abstracted information to a format that may be output by the interface system to the user. For example, the interface system may comprise an interface (e.g. a screen) arranged to display the altitude of the aircraft. A system onboard the aircraft may output the altitude as being on a scale between 1 and 5. Thus, the processor may abstract the aircraft output information by converting the scale between 1 and 5 to a set of altitudes, and output the user-readable output information via the interface system. Thus, the user does not need to know what the altitude scale output by the aircraft means, but may simply read off the altitude from the human-machine interface. For example, the processor may convert the units of measurement of a measurement output by the aircraft, e.g. to a unit more familiar to the user of the interface system.

In some examples, the processor is arranged to convert the aircraft output information from a discrete format to a continuous format when converting the aircraft output information to interface-readable output information, and vice versa. For example, the aircraft output information may be a discrete output, e.g. the altitude is output as a number on a scale between 1 and 5, which is converted to a continuous range of altitudes when presented to the user via the interface system. Similarly, the user-input information may be discrete information, which is converted to a continuous aircraft input information.

The interface system is arranged to receive user input information from the user. The user is a remote pilot, where the interface system is used to pass information to the aircraft from the remote pilot. For example, the user input information may be provided in response to the aircraft output information.

The processor is arranged to convert the user input information to aircraft-readable output information. The interface system may be arranged to then send the aircraft-readable output information to the aircraft, in a format that the aircraft is able to process, depending on the particular operating system being used by the aircraft. For example, the processor may be arranged to convert the user input information into a format readable by a particular aircraft system onboard the aircraft, e.g. the aircraft system relevant to the user input information. Thus, the processor may be arranged to 'translate' the information from the user to the aircraft-readable input to systems onboard the aircraft, such that the user is able to interact with the aircraft without knowledge of how to operate the specific systems onboard the aircraft.

In some examples, the aircraft-readable input information is arranged to be input to the plurality of aircraft systems for controlling one or more systems onboard the aircraft. For example, the user may input to the interface system to retract the landing gear of the aircraft. The particular location of the button used to issue this command may differ from aircraft to aircraft of the plurality of aircraft; however, the user of the interface system does not need to know this, and merely inputs the command into the interface system, e.g. via a button used for retracting the landing gear. The processor is arranged to receive the command from the interface system, and be arranged to translate it to a command readable by the aircraft, e.g. by directing the command to the aircraft system responsible for retracting the landing gear. The information is then sent to the aircraft, e.g. to the landing gear system, and the landing gear for the landing gear is retracted.

Therefore, a remote pilot may only need to be trained on how to use the interface system in order to pilot a plurality of different aircraft, which themselves may have different control systems. This may allow a remote user to operate many different types of aircraft from the same interface system. This may reduce training times, and airline costs. This may also help to reduce errors onboard, for example where the remote pilot confuses two different aircraft operating systems, and presses a button which causes the aircraft to respond differently to what is intended.

In some examples, the processor is arranged to convert the file type and/or protocol of the aircraft output information when converting the aircraft output information to interface-readable output information. In some examples the processor is arranged to convert the file type and/or protocol of the user input information to aircraft-readable output information. This may be useful as the various systems onboard the aircraft may use a wide range of different file types and operating systems, and the interface system may not be able to output the information of all of the file types directly. This may allow the interface system to communicate with a wide range of systems onboard the aircraft.

In some examples, the aircraft output information comprises information from a plurality of sensors onboard the aircraft. For example, the sensors may comprise one or more sensors indicating the fuel levels in the aircraft. In some examples, the sensors comprise one or more sensors indicating the status of various components onboard the aircraft, e.g. the position of the flaps and slats of the aircraft. In some examples, the sensors comprise one or more sensors indicating the status of the aircraft, e.g. the speed, temperature and altitude of the aircraft. It will be appreciated that this is a non-exhaustive list and there may be many other sensors onboard the aircraft arranged to monitor the aircraft status and components. For example, there may be one or more sensors arranged to measure the pressure of the tyres of the landing gear, e.g. to determine the on-ground situation of the aircraft.

In some examples, the interface system comprises one or more displays for presenting the interface-readable output information to the user. For example, the processor may be arranged to format the interface-readable output information such that it may be output to the user via a visual display. The amount and/or type of information presented using the one or more displays may change depending on the type of aircraft being remote piloted.

For example, a system of the plurality of aircraft systems comprises a primary flight display. The primary flight display typically displays information to the pilot onboard the aircraft regarding the status of the aircraft (e.g. heading, airspeed, attitude indicator), with the presentation of the information varying between types of aircraft. For example, the primary flight display may be arranged to receive information from one or more sensors onboard the aircraft. The information from the primary flight display may be output to the interface system. For example, the information from the primary flight display may be output to the interface system instead of the information from one or more sensors.

In some examples, the plurality of aircraft systems are arranged to issue warning signals regarding that status of the aircraft. For example, the warning signals may be typically presented to the pilot in the cockpit, to allow the pilot to respond to a given situation. The warning signals may be issued to both the pilot in the cockpit and the remote pilot. For example, the processor may receive the warning signals from the plurality of aircraft systems, and output the warning signals to the interface system, e.g. via a visual display or audio signals. For example, the processor may be arranged to prioritise the warning signals over other (e.g. routine) information, when selecting the information to be displayed to the remote pilot. This may allow for the remote pilot to react quickly to a given situation.

In some examples, the user input information comprises information for controlling the flight of the aircraft. For example, the user input information may comprise an input indicating that the state of one or more systems of the aircraft should be changed. For example, the user-input information may be an instruction to lift the flaps onboard the aircraft, e.g. from the user pressing a button on the interface system. This input is received by the processor, where it is converted into aircraft-readable input information, specifically information that is readable by the particular control system onboard the aircraft that controls the flaps.

In some examples, the interface system comprises a plurality of user controls arranged to receive the user input information, wherein the processor is arranged to map the user controls to a plurality of aircraft controls. For example, the interface system may comprise a plurality of controls, similar to those found within the cockpit of an aircraft, where the controls each have a particular function related to the control, navigation, communications, or other functions onboard the aircraft.

The user of the interface system may be trained on how each of the user controls work, without knowledge of the layout of similar controls on the aircraft being remote piloted. When the user inputs information into the interface system, e.g. by pressing a button, the processor may be arranged to receive the input and determine which aircraft function the input relates to.

The processor may be arranged to map this input to the relevant control onboard the aircraft, e.g. a button is pressed on the interface system that retracts the landing gear may be mapped to a switch onboard the aircraft being remote-piloted. The processor may be arranged to send the information to the relevant component onboard the aircraft, e.g. to flip the switch onboard and retract the landing gear.

The processor may be arranged to route information in this way between the interface system and the aircraft being remote piloted for a plurality of aircraft. This may allow the user to learn the layout of the interface system, without needing to know the layout of the aircraft being piloted.

For example, turning the landing lights on or off is a functionality that is generally universal to most aircraft; however, the location of the switch to do so may vary between aircraft. The button may be positioned in a particular location on the interface system, such that the user may be taught where the button is, and the processor may be arranged to map this button to the location of the relevant switch on the particular aircraft being piloted.

In some examples, the plurality of user controls are adapted based on the type of aircraft. For example, the positions a particular lever of the interface system may be moved to may be changed depending on the type of aircraft, e.g. the number of positions the lever may be moved to, or the quantities associated with the different positions of the lever. This may make it easier for the processor to convert the user-input information to aircraft readable-input information, and vice versa.

For example, on one type of aircraft, the flaps may be adjusted to five different positions, whereas on a different aircraft the flaps may only be adjusted to three different positions. Thus, it may be useful to change the number of positions the lever may be moved to, and the airspeed associated with the different positions of the lever or the different flap positions. For example, the controls of the interface system may comprise an associated adaptable visual display indicating the number of control positions or associated quantities, that changes based on the aircraft being piloted.

In some examples, the number of user controls available to the user is adapted based on the type of aircraft. For example, there may be an aircraft control that may be used on one aircraft that does not exist on another aircraft, and thus it may be useful to add or remove the particular control depending on the type of aircraft being remote piloted. For example, a larger aircraft may have more associated controls than a smaller aircraft. This may prevent the user from attempting to implement a certain functionality of the aircraft that it is not possible, and thus may prevent confusion of the remote user.

In some examples, the plurality of user controls comprise a tactile panel. The tactile panel may include a plurality of different controls for controlling various functionalities onboard the aircraft. This may allow the user to easily input information into the interface system. For example, the tactile panel may be arranged over the head of the remote user, to mimic the overhead panel user in the cockpit of the aircraft. The panel may be adapted based on the type of aircraft being piloted.

In some examples, the interface system is arranged to determine the type of aircraft being remote piloted, e.g. in order to determine how to convert the input and output information. In some examples, the interface system is arranged to receive an input of the type of aircraft that is being remote piloted. For example, the processor may be arranged to retrieve a model of the aircraft being remote piloted from the memory, when the type of aircraft is input.

The model of the aircraft being remote piloted may include information on how to convert the user input information to aircraft readable-input information, and vice versa. For example, the processor may be arranged to receive aircraft input information and output aircraft readable-input information in a particular format(s), e.g. the processor may be arranged to convert the aircraft input information and user input information in a particular way for a given aircraft.

In some examples, the interface system comprises a transmitter arranged to transmit the aircraft-readable input information to the aircraft. For example, the transmitter may be arranged to receive the output information from the processor and send it to the aircraft, e.g. via radio.

In some examples, the interface system comprises a receiver arranged to receive the aircraft output information. For example, the receiver may be arranged to send the aircraft output information to the processor.

In some examples, the aircraft output information comprises navigational information. For example, a system of the plurality of aircraft systems comprises a flight management system, where the interface system is arranged to receive the output information from the flight management system.

The processor may be arranged to receive the navigational information, and convert it such that it may be output to the user via the interface system. This may allow the remote user to adjust the controls of the aircraft based on the navigational information, e.g. to begin landing procedures when the navigational information shows that aircraft is close to its destination. This may also allow the remote pilot to divert the aircraft in the case of an emergency.

For example, there may be a minimum altitude at which the remote user needs to decide whether to go ahead with landing the aircraft or not. Thus, the processor may be arranged to receive the altitude of the aircraft from sensors onboard the aircraft, and the processor may output this information to the user via the human-machine interface indicating how long the remote pilot has to decide whether to land the aircraft or not. This may be achieved without the remote pilot knowing the minimum altitude for the particular aircraft being piloted.

In some examples, the aircraft output information comprises communication information. For example, the communication information may be from communication systems onboard the aircraft, e.g. radio communications between the aircraft and air-traffic control, and/or between the aircraft being piloted and other nearby aircraft. For example, the interface system may comprise a communication system arranged to output communication information to the user, e.g. a radio system arranged to output audio information to the user.

The processor may be arranged to receive the communication information, and convert it such that it may be output to the user via the interface system. This may allow the remote user to receive (e.g. all) relevant information related to the flight of the aircraft, and adjust the aircraft controls accordingly, e.g. if air traffic control indicates that the aircraft should fly at a lower altitude. For example, the communication system of the interface system may allow communication between the remote user and the aircraft and/or air traffic control, e.g. to allow the remote user to issue communications from the aircraft to air traffic control as if they were the pilot onboard the aircraft. This may be particularly useful in the case of pilot incapacitation. For example, the plurality of aircraft systems comprise aircraft communication addressing and reporting systems (ACARS).

In some examples, the aircraft output information comprises system management information. The processor may be arranged to receive the system management information, and convert it such that it may be output to the user via the interface system. For example, the system management information may comprise information regarding the health of various onboard systems, e.g. the onboard power distribution system. This may be output to the user at a known position on the interface system, e.g. even if different aircraft show particular warnings at different places in the cockpit, or in different ways, the warning may be shown at the same place or format at the remote human-machine interface, regardless of the type of aircraft being piloted. This may allow the user to easily see if there are any problems with the aircraft.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

One or more non-limiting examples will now be described, by way of example only, with reference to the accompanying figures, in which:
Figure 1 shows schematically a system for remote piloting an aircraft;
Figure 2 is a flow-chart of a method of remote control of an aircraft
Figure 3 is a flow-chart of a method of remote control of the flaps and slats of an aircraft;
Figure 4 is a flow-chart of a method of remote navigation of an aircraft.

### DETAILED DESCRIPTION

The examples described herein may be used for controlling a human-machine interface for remote piloting an aircraft. Other uses, however, are also envisaged and the examples are not limited to this.

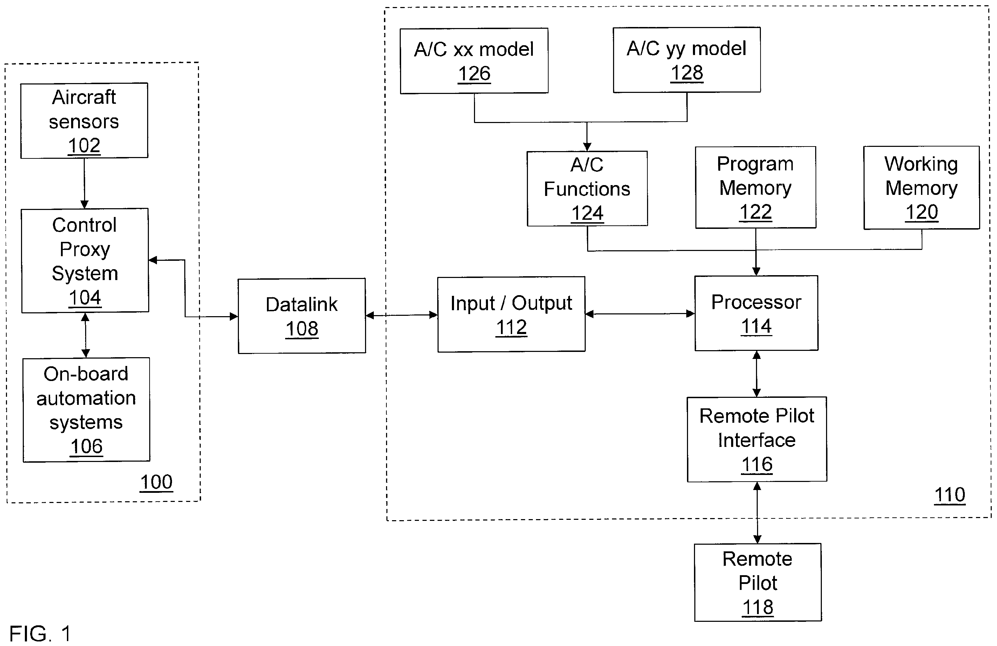

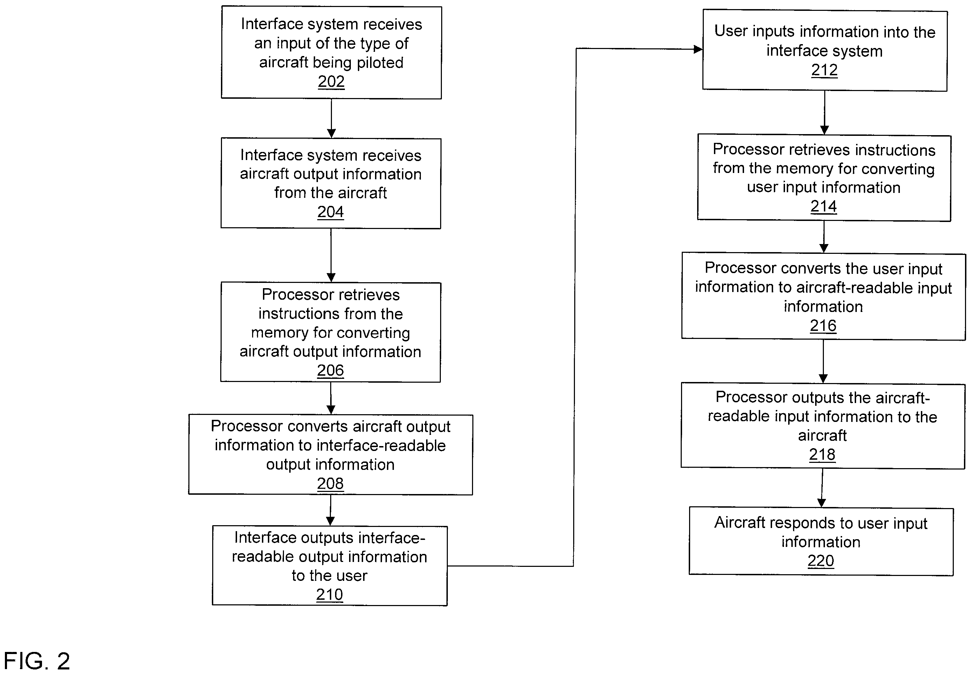

Figure 1 shows schematically a system for remote piloting an aircraft 100 using a remote human-machine interface system 110, which, for example, performs the steps described with reference to Figure 2. The aircraft 100 and remote human-machine interface system 110 are remote from one-another, and communicate via a datalink 108. The interface system 110 is on the ground, and controlled by a remote pilot 118. The remote pilot 118 is able to input information into the interface system 110 via the remote pilot interface 116, in order to control the flight, navigation, and/or communications of the aircraft 100. The remote pilot interface 116 includes controls able to receive inputs from the remote pilot 118, as well as displays to output information from the aircraft 100 to the remote pilot 118.

For example, the datalink 108 may include one or more transmitters and one or more receivers of the aircraft 100 and interface system 110 for sending and receiving information between the aircraft 100 and the interface system 110, e.g. via a radio or satellite link.

The aircraft 100 includes aircraft sensors 102, a control proxy system 104, and onboard automation systems 106. The aircraft sensors 102 may include any sensors on board the aircraft used to determine the current state of the aircraft, such as the position, speed, and altitude of the aircraft. The aircraft sensors 102 may further include any sensors on board the aircraft used to determine the state of any systems on board the aircraft, such as fuel levels, and the position of various components, e.g. the position of the landing gear.

The onboard automation systems 106 may include onboard systems such as the flight management system and/or communication systems. The onboard automation systems 106 may also include other onboard systems used to control various functionalities of the aircraft, such as the position of various components of the aircraft (e.g. the position of the flaps or slats). For example, the onboard automation systems 106 may include the automated flight control system, and the landing gear control system.

The control proxy system 104 receives inputs from the aircraft sensors and the onboard automation systems, to be sent to the remote human-machine interface system 110 via the datalink 108. The control proxy system 104 of the aircraft 100 communicates with an input-output module 112 of the interface system 110 via the datalink 108. For example, the datalink 108 may comprise a radio channel used (e.g. exclusively) to send and receive information to and from the aircraft 100 and the interface system 110. For example, the control proxy system 104 may include a transceiver configured to send and/or receive information, relevant to the control of the aircraft 100, to and/or from the interface system 110.

The input/output module 112 of the interface system 110 is arranged to receive information from the aircraft 100, and send information input by the remote pilot 118 to the aircraft 100. For example, the input-output module 112 may include a transceiver able to send and/or receive information relevant to the control of the aircraft 100 to and/or from the control proxy system 104.

The input-output module 112 is connected to a processor 114. The processor 114 is arranged to receive information from the aircraft 100, convert it into interface-readable output information, and output it to the remote pilot interface 116. The processor 114 is also arranged to receive information from the remote pilot interface 116 (e.g. the input from the remote pilot 118), convert it into aircraft-readable output information, and output it to the input-output module 112 to be sent to the aircraft via the datalink 108.

When the remote pilot interface 116 initiates contact with the aircraft 100, in one example, the processor 114 may receive the type of aircraft 100 from the control proxy system 104 of the aircraft 100 (via the datalink 108). In one example, the processor 114 may receive the type of aircraft 100 from an input by the remote pilot 118 to the remote pilot interface 116. The processor 114 then retrieves the aircraft model from the aircraft functions memory 124, e.g. the aircraft xx model 126 or the aircraft yy model 128, which may have different aircraft operating systems.

The processor 114 is also connected to a working memory 120 and a program memory 122. The program memory 122 includes information regarding how to convert the information output by the aircraft 100 into a format that may be presented to the remote pilot 118 via the remote pilot interface 116, and vice versa. The working memory 120 stores the information being converted, before, during, and after the conversion, to be output to the aircraft 100 and/or the remote pilot interface 116.

When the interface system 110 receives information from the aircraft 100 at the input-output module 112, the processor 114 retrieves, from the program memory 122, instructions for how to convert the particular piece of information to a format readable by the remote pilot interface 116, based on the aircraft model 126, 128. The processor 114 then outputs the converted information to the remote pilot interface 116, where it may be presented to the remote pilot 118.

In order to output information to the remote pilot 118, the remote pilot interface 116 may include a variety of different displays for displaying information from the aircraft 100 to the remote pilot 118. The processor 114 may be arranged to output the converted information to a particular display of the remote pilot interface 116.

The remote pilot interface 116 also includes a plurality of different controls arranged to receive input information from the remote pilot 118 for controlling the aircraft 100. The different controls of the remote pilot interface 116 are the same regardless of the type of aircraft 100 being piloted, and thus the remote pilot 118 only needs to be trained on one operating philosophy (e.g. the remote pilot interface 116 operating philosophy) in order to pilot a plurality of aircraft. The remote pilot interface 116 receives the input from the remote pilot 118, and sends it to the processor 114.

The processor 114 receives the input information from the user and, based on the aircraft model 126 128, converts the information input by the remote pilot 118 into a format readable by the aircraft, by retrieving how to convert the format of the information from the program memory 122 and storing the information input by the remote pilot 118 in the working memory 120. When the processor has converted the information, input by the remote pilot 118 into the remote pilot interface 116, into a format readable by the aircraft 100, the information is sent from the interface system to the aircraft 100 via the datalink 108. The control proxy system 104 receives the input from the interface system 110, and routes the information to the relevant onboard automation system 106 to allow the remote pilot 118 to control the aircraft 100.

For example, the remote pilot 118 may input into the remote pilot interface 116 that the aircraft landing lights should be turned on. The processor 114 receives this input and, based on the aircraft model 126, 128, determines how to convert the input into a format readable by the aircraft 100. The processor converts the input from the remote pilot 118, and outputs the aircraft input information to the aircraft 100 via the input-output module 112 and the datalink 108. The control proxy system 104 receives the instruction to turn the landing lights on, and sends it to the relevant onboard automation system 106 for controlling the landing lights.

The remote pilot 116 controls are the same regardless of the type of aircraft 100 being remote piloted, to allow the remote pilot 116 to be able to operate a plurality of aircraft with the same controls. However, the controls may be adapted depending on the aircraft model 126, 128, e.g. to adjust the quantities associated with the different controls, and/or to adjust the number of available discrete positions of a control such as a lever. Thus, based on the aircraft model 126, 128 the processor 114 outputs to the remote pilot interface 116 to adapt the controls.

Figure 2 shows a flow-chart of a method of remote control of an aircraft. The method involves a sequence of steps which take place within a system of the aircraft and the remote human-machine interface system. These steps may occur sequentially. Some steps may occur simultaneously, for example on parallel processors. The method may occur simultaneously for many different aircraft components or systems. The method may also be repeated for all information to be conveyed to and from the aircraft 100 and interface system 110.

At a first step 202, the interface system 110 receives an input of the type of aircraft 100 being remote piloted, e.g. from the control proxy system 104 of the aircraft via the datalink 108. The interface system 110 then retrieves from the aircraft functions memory 124 the aircraft model 126, 128. The processor 114 may then update the remote pilot interface 116 for that aircraft model, e.g. by changing the scales on the controls of the remote pilot interface 116.

At a second step 204, the interface system 110 receives information output by systems onboard the aircraft, e.g. from the aircraft sensors 102 and the on-board automation systems 106 via the control proxy system 104. This information is sent via the datalink 108 between the aircraft 100 and interface system 110, and sent to the processor 114.

At a third step 206, the processor retrieves instructions from the program memory 122 for converting the information received from systems onboard the aircraft to a format that may be output to the remote pilot via the remote pilot interface 116 of the interface system 110.

At a fourth step 208, the processor converts the aircraft output information to a format readable by the remote pilot interface 116, and is output to the remote pilot 118 via the remote pilot interface 116 at a fifth step 210, e.g. via a display of the remote pilot interface 116.

At a sixth step 212, the remote pilot 118 inputs information into the remote pilot interface 116 of the interface 110, e.g. in response to the information output at the fifth step 210.

At a seventh step 214, the processor 114 receives the user input information from the remote pilot interface 116, and retrieves instructions from the program memory 122 for converting the user input information to a format that may be read by the aircraft 100, based on the aircraft model 126,128. For example, the user input information is converted to a format that is readable by the particular on-board automation system 106 relevant to the user input information.

At an eighth step 216, processor converts the user input information to a format that is readable by the control proxy system 104 of the aircraft, and is output to the aircraft 110 at a ninth step 218, e.g. via the input-output system 112 and datalink 108. At a tenth step 220, the aircraft responds to the user input information. The control proxy system 104 sends the user input information to the relevant on-board automation system 106. The on-board automation system 106 receives the user input information and responds to the particular instruction. For example, the user input information may be to lift the flaps. The flaps automation system 106 may thus receive this instruction, and lift the flaps. The second step 204 to the tenth step 220 may then repeat, e.g. a sensor 102 onboard the aircraft 100 may output to the interface system 110 that the flaps have been lifted, and the processor 114 may output to the remote plot 116 interface the associated airspeed with the new flap position, such that the remote pilot 118 can react accordingly.

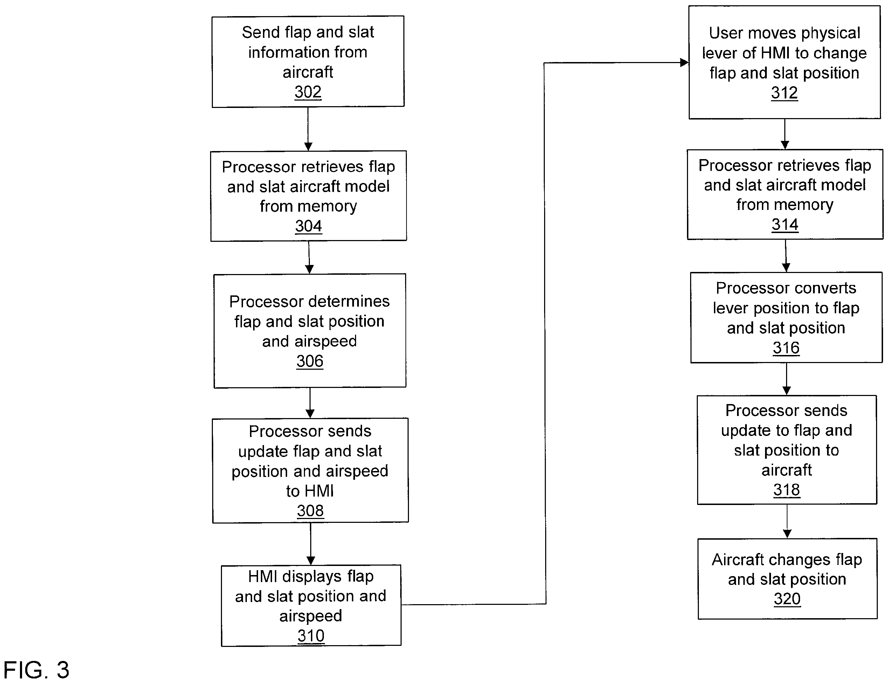

Figure 3 shows a flow-chart of a method of remote controlling the flaps and slats of an aircraft, e.g. to adjust the speed of the aircraft, using the method described with reference to Figure 2.

At a first step 302, the aircraft sensors 102 monitoring the flaps and slats of the aircraft send information about the position of the flaps and slats to the control proxy system 104. The control proxy system 104 then sends this information to the interface system 110 via the datalink 108, where it is received by the processor 114.

At a second step 304, the processor 114 retrieves the aircraft model 126, 128 for the flaps and slats for the particular aircraft being piloted from the aircraft functions memory 124, e.g. how to convert the information received from the aircraft 100 about the flaps and slats to a format that may be output to the remote pilot 118 via the remote pilot interface 116.

At a third step 306, the processor 114 uses the aircraft model 126, 128 to determine the flap and slat position, and the associated airspeed associated with that flap and slat position, and converts this information to a format that can be output to the remote pilot 118 via the remote pilot interface 116 at a fourth step 308.

At a fifth step 310, the remote pilot interface 116 displays the flap and slat position and airspeed. This may include showing the airspeed via a display, and updating the remote pilot interface 116 by changing the scales on the controls of the remote pilot interface 116 associated with the position of the flaps and slaps, e.g. the scales of a lever that can be moved by the remote pilot 118 to change the flap and slat positions.

At a sixth step 312, the remote pilot 118 moves the lever of the remote pilot interface 116 to change the flap and slat position, e.g. based on the output information from the flap and slat sensors such as the airspeed. This user input is sent to the processor 114.

At a seventh step 314, the processor 114 retrieves the aircraft model 126, 128 for the flaps and slats for the particular aircraft being piloted from the aircraft functions memory 124, e.g. how to convert the input information received from the remote pilot 118 about how to move the flaps and slats to a format that may be output to the aircraft 100.

At an eighth step 316, the processor 114 uses the aircraft model 126, 128 to convert the user input information to a format that can be output to the aircraft 100 via the datalink 108 at a ninth step 318. At a tenth step 320, the aircraft 100 receives the user input to move the flaps and slats at the control proxy system 104. The control proxy system 104 directs the information to the on-board automation system 106 that controls the flaps and slats, and the position of the flaps and slats is changed.

The first step 302 to the tenth step 304 can then be repeated, indicating the change in the flap and slat position, such that the remote pilot 118 knows that the aircraft 100 has responded to their input, and can continue to control the aircraft accordingly.

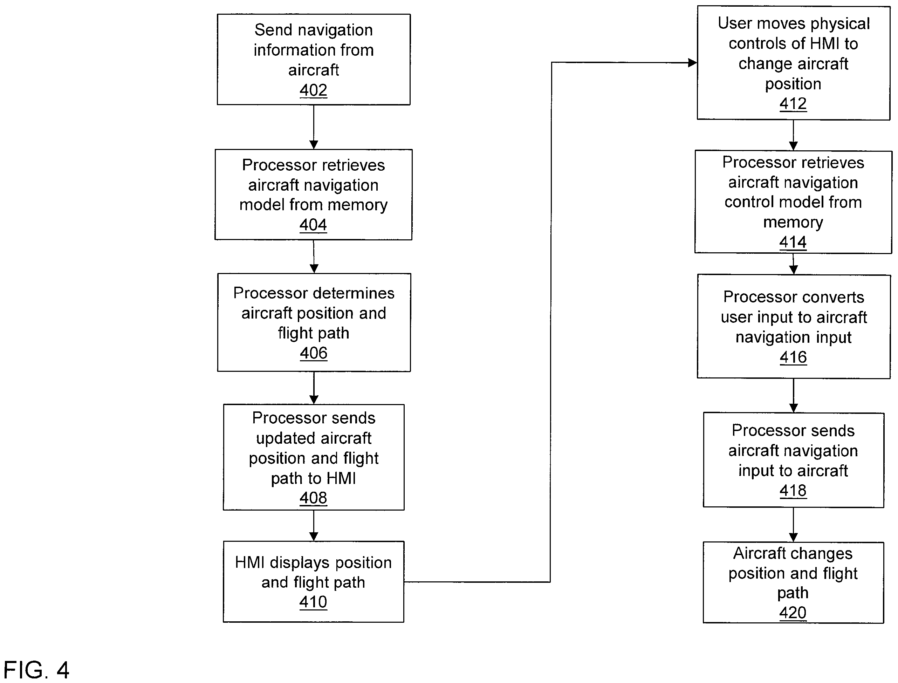

Figure 4 shows a flow-chart of a method of remote navigation of an aircraft, using the method described with reference to Figure 2.

At a first step 402, the flight management system of the on-board automation systems 106 sends navigation information to the control proxy system 104. The navigation information may include information regarding the flight path, the current heading of the aircraft, the time to the destination, and/or any other relevant information regarding the navigation of the aircraft 100. The control proxy system 104 then sends this information to the interface system 110 via the datalink 108 where it is received by the processor 114.

At a second step 404, the processor 114 retrieves the aircraft model 126, 128 for navigating the particular aircraft being piloted from the aircraft functions memory 124, e.g. how to convert the information received from the flight management system to a format that may be output to the remote pilot 118 via the remote pilot interface 116.

At a third step 406, processor 114 uses the aircraft model 126, 128 to convert the navigation information, e.g. the aircraft position and the flight path, into a format that can be output to the remote pilot 118 via the remote pilot interface 116 at a fourth step 408. At a fifth step 410, the remote pilot interface 116 displays the navigation information including the position of the aircraft 100 and flight path, e.g. via a display.

At a sixth step 412, the remote pilot 118 adjusts the physical controls of the remote pilot interface 116 to change the aircraft position. This user input is sent to the processor 114.

At a seventh step 414, the processor 114 retrieves the aircraft model 126, 128 for the navigation of the particular aircraft being piloted from the aircraft functions memory 124, e.g. how to convert the input information received from the remote pilot 118 regarding changing the aircraft position to a format that may be output to the aircraft 100.

At an eighth step 416, the processor 114 uses the aircraft model 126, 128 to convert the user input information to a format that can be output to the aircraft 100 via the datalink 108 at a ninth step 418. At a tenth step 420, the aircraft 100 receives the user input to change the position of the aircraft at the control proxy system 104. The control proxy system 104 directs the information to the on-board automation system 106 that can change the position of the aircraft, and also to the flight management system to adjust the flight path.

It will be appreciated by those skilled in the art that the invention has been illustrated by describing one or more specific embodiments thereof, but is not limited to these embodiments; many variations and modifications are possible, within the scope of the accompanying claims.

## Claims

1. A remote human-machine interface system for piloting an aircraft;
wherein the interface system is agnostic to a plurality of aircraft;
wherein the interface system is arranged to:
receive user input information from a user; and
receive aircraft output information from a plurality of aircraft systems onboard the aircraft;
wherein the interface system comprises a processor is arranged to:
convert the user input information to aircraft-readable input information; and
convert the aircraft output information to interface-readable output information;
wherein the interface system is further arranged to:
output the interface-readable output information to the user; and
output the aircraft-readable input information to the aircraft.

2. The interface system as claimed in claim 1, comprising a transmitter arranged to transmit the aircraft-readable input information to the aircraft.

3. The interface system as claimed in claim 1 or 2, comprising a receiver arranged to receive the aircraft output information.

4. The interface system as claimed in any preceding claim, wherein the aircraft-readable input information is arranged to be input to the plurality of aircraft systems for controlling one or more systems onboard the aircraft.

5. The interface system claimed in any preceding claim, wherein the interface system is arranged to receive an input of the type of aircraft that is being remote piloted.

6. The interface system as claimed in any preceding claim, wherein the aircraft output information comprises information from a plurality of sensors onboard the aircraft.

7. The interface system as claimed in any preceding claim, comprising one or more displays for presenting the interface-readable output information to the user.

8. The interface system as claimed in any preceding claim, wherein the user input information comprises information for controlling the flight of the aircraft.

9. The interface system as claimed in any preceding claim, comprising a plurality of user controls arranged to receive the user input information, wherein the processor is arranged to map the user controls to a plurality of aircraft controls.

10. The interface system as claimed in claim 9, wherein the plurality of user controls are adapted based on the type of aircraft.

11. The interface system as claimed in claim 9 or 10, wherein the number of user controls available to the user is adapted based on the type of aircraft.

12. The interface system as claimed in claim 9, 10 or 11, wherein the plurality of user controls comprise a tactile panel.

13. The interface system as claimed in any preceding claim, wherein the aircraft output information comprises navigational information.

14. The interface system as claimed in any preceding claim, wherein the aircraft output information comprises communication information.

15. A method of piloting an aircraft with a remote human-machine interface system,
wherein the interface system is agnostic to a plurality of aircraft;
wherein the method comprises:
receiving user input information from a user at the interface system; and
receiving aircraft output information from a plurality of aircraft systems onboard the aircraft at the interface system;
converting the user input information to aircraft-readable input information at a processor connected to the interface system;
converting the aircraft output information to interface-readable output information at the processor;
outputting the interface-readable output information to the user at the interface system; and
outputting the aircraft-readable input information to the aircraft at the interface system.
